# EUROPEAN PATENT SPECIFICATION

(11) **EP 2 937 537 B1**
(45) Date of publication and mention of the grant of the patent: **07.12.2016**
(21) Application number: 15164811.0
(22) Date of filing: 23.04.2015
(51) Int. Cl.: G01N 21/552, G01N 21/85, B60K 13/04, F01N 3/20, F01N 11/00, B60K 15/03

(54) **UREA CONCENTRATION SENSOR**
HARNSTOFFKONZENTRATIONSSENSOR
CAPTEUR DE CONCENTRATION D'URÉE

(30) Priority: 23.04.2014 US 201461983028 P
(43) Date of publication of application: 28.10.2015
(73) Proprietor: Littelfuse, Inc., Chicago, IL 60631 (US)
(72) Inventor: Johnson, Brian, Chicago, IL Illinois 60631 (US)
(74) Representative: Börner, Robert

(56) References cited:
- EP-A2- 0 877 264
- DE-B3-102011 089 703
- US-A- 4 240 747
- US-A- 5 250 095
- US-A1- 2004 202 424
- US-A1- 2009 034 901
- US-A1- 2011 043 799

## Description

### Related Applications

This present application claims priority to U.S. provisional patent application No. 61/983,028, filed Apr 23, 2014.

### Field of the Disclosure

This disclosure relates generally to the field of liquid condition sensing and particularly to sensing characteristics of urea solution in a urea tank, such as, for example, urea for use in a motor vehicle.

### Background of the Disclosure

Urea, or urea based solutions are often used in automotive application to reduce emissions. For example, some diesel powered motor vehicles include a urea tank, separate from the fuel tank, which is used to carry an operating fluid such as an automotive urea solution, or the like. The urea solution is stored in the urea tank and is sprayed into the exhaust gases of the vehicle in order to convert oxides of nitrogen into elementary nitrogen and water. Accordingly, the harmful emissions of the vehicle are reduced. As will be appreciated, various countries in the world have regulated that some vehicles include urea based emissions systems in order to comply with emissions standards. These systems are sometimes referred to as Selective Catalytic Reduction (SCR) system or SCR vehicles.

In order for SCR vehicles to properly regulate and reduce exhaust gas emissions, information related to the composition of the urea solution is used to properly adjust certain vehicle parameters and to optimize vehicle performance. In particular, such information is used to control of the emissions system. One characteristic about the urea solution that is useful for operation is the "quality" of the urea. As will be appreciated, contaminants, changes in the ratio of urea to other constituents in the solution, temperature variation, as well as other changes can impact the life expectancy and the effectiveness of the urea solution.

One known sensor proposes to use radio frequency (RF) waves to measure the quality and concentration of urea. This sensor is explained in greater detail in U.S. Patent Application No. 12/803,331, filed on June 24, 2010 and entitled "Liquid level and quality sensing apparatus, systems and methods using EMF wave propagation".

Another example sensor proposed to transmit light through the urea solution to measure the quality and concentration of the urea. This sensor is explained in greater detail in PCT Application No. EP2012/063055 filed June 4, 2012 and entitled "Device for measuring urea concentration".

US 2004/0202424 A1 discloses a prismatic reflection optical waveguide device which has waveguide segments, which may be optical fibers. The waveguide or optical fibers together are shaped to form a "V" or "W" and immersed in a liquid medium under analysis.

### Brief Summary

In one embodiment, a sensor to measure a liquid includes a light source operably coupled to a lumen disposed in a liquid solution, the light source configured to emit light and communicate the light to the lumen. The lumen is provided as a bent optical fibber. The sensor further includes a light detector operably coupled to the lumen, the light detector configured to receive at least a portion of the light from the lumen; and a controller configured to determine a concentration or quality of the liquid solution based on the light emitted by the light source and the portion of light received by the light detector.

According to the invention the lumen is "Z" shaped.

In a further embodiment a method of measuring a liquid includes emitting a first quantity of light from a light source attached to a lumen disposed in a liquid solution; transmitting the first quantity of light through the lumen; receiving a second quantity of light at a light detector attached to the lumen; and determining a concentration or quality of the liquid solution based on the first quantity of light and the second quantity of light.

The lumen is provided as a bent optical fiber and the lumen is "Z" shaped.

### Brief Description of the Drawings

By way of example, specific exemplary embodiments of the disclosed device, and examples which do not fall within the scope of the appended claims, will now be described, with reference to the accompanying drawings, in which:
**FIG. 1** is a block diagram of a system for measuring the concentration and/or quality of urea;
**FIGS. 2-4** are block diagrams of sensors that may be implemented in the system of **FIG. 1****;**
**FIG. 5** is a block diagram of a logic flow for measuring concentration and/or quality of a urea solution, arranged according to at least some exemplary embodiments of the present disclosure.

### Detailed Description

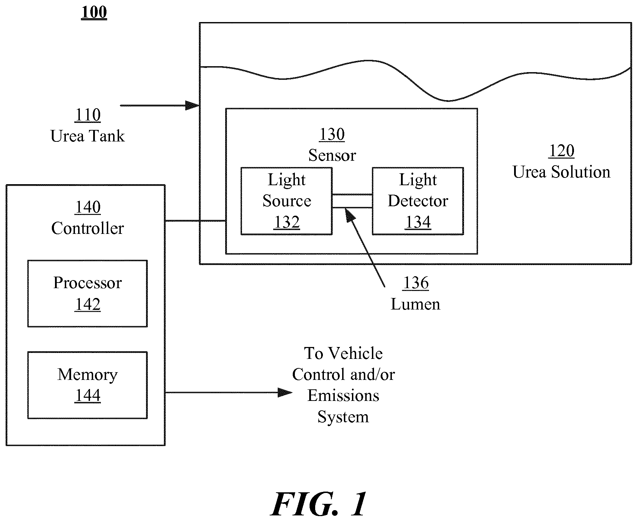

**FIG. 1** is a block diagram of a system 100 for measuring urea quality and/or concentration according to embodiments of the present invention, the scope of which being defined by the appended claims. As depicted, the As depicted, the system 100 includes a tank 110 having urea solution 120 disposed therein. The tank 110 may be made from a variety of materials, such as, for example, plastic, composite, metal, or the like. In general, the tank 110 will be a non-conductive material. The urea solution may be a variety of urea solutions. Furthermore, while the present disclosure is related to measuring the quality and concentration of urea, it could be applied to other liquids, such as, for example, measuring the alcohol content in an automobile fuel, or the like.

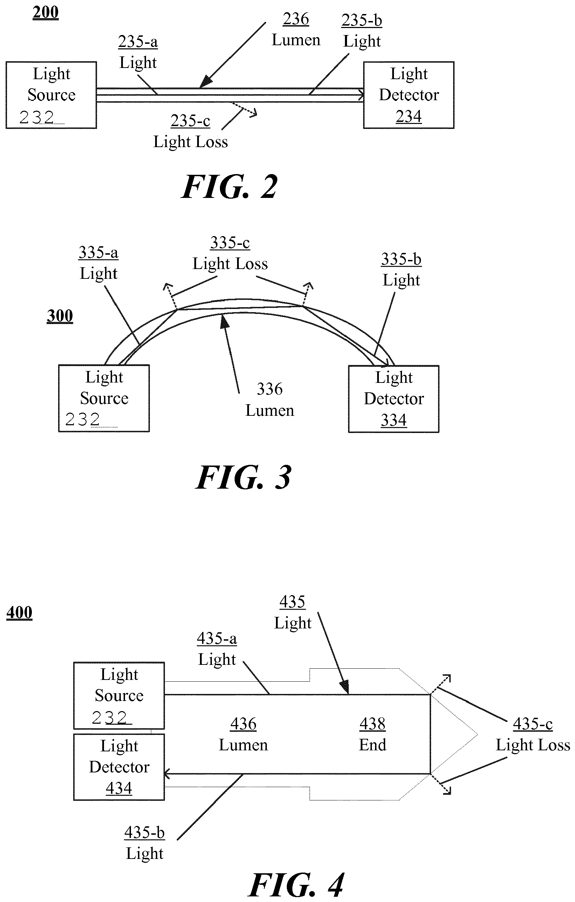

A sensor 130 is also disposed within the tank 110 and operably coupled to a controller 140. Various example embodiments and examples of the sensor 130 are described below with reference to **FIGS. 2-4****.** In general the sensor 130 includes a light source 132 and a light detector 134 optically connected to one another via a lumen 136. In general, the sensor 130 is used to measure the concentration and/or quality of the urea solution 120 based on the refractive index of the urea solution 120. More specifically, light is passed from the light source 132 to the light detector 134 via the lumen 136. As the light propagates from the light source 132 to the light detector 134, some light will escape from the lumen 136. In particular, at least a portion of the lumen 136 may be directly immersed in the urea solution 120.

As noted above, for certain applications, such as in vehicle exhaust systems, information concerning a concentration of urea in a urea solution may be useful for proper operation. For example, a target composition for a solution may be a concentration of urea dissolved in water, such as approximately 33% urea and 67% water. The embodiments are not limited in this context.

In the present embodiments, techniques and apparatus may be applied to determine properties of a liquid solution where the refractive index may be variable according to a concentration of a substance with the liquid solution. For example, as the concentration and/or quality of the urea solution 120 changes, the refractive index of the urea solution 120 may also change. As such, the amount of light escaping from the lumen 136 may change accordingly. This is because the angle of internal reflection of light traveling through the lumen 136 and striking an interface between the lumen 136 and urea solution 120 varies with refractive index of the urea solution 120. As the angle of internal reflection changes for a given amount of light in the lumen 136, the amount of light not internally reflected and instead escaping the lumen 136 changes. Therefore, by measuring the amount of light escaping the lumen 136, or the amount of light received by the light detector 134, changes in the refractive index of the urea solution 120 may be determined. Accordingly, based upon knowledge of the relationship between refractive index and urea concentration or quality of the solution, the sensor 130 in conjunction with the controller 140 may measure the concentration and/or quality of the urea solution 120 based on the amount of light received at the light detector 134, or alternatively the amount of escaped light. Because the refractive index of urea solutions may be readily known or measurable, the present embodiments provide a useful manner for monitoring changes in urea solutions as well as controlling systems that employ such solutions.

In general, the light source 132 can be any of a variety of types of light sources and the light detector 134 can be any of a variety of types of light detectors. For example, the light source 132 may be a light emitting diode (LED). The light detector 134 may be a photo-detector, a photo-diode, or the like. The lumen 136 may be any of a variety of light carrying lumens. However, according to the present invention, the lumen 136 is a fiber optic cable. Furthermore, the lumen 136 may be uncoated and/or porous.

The controller 140 may include a processor 142 and a memory 144. In general, the processor 142 may be configured to execute one or more instructions to cause the sensor 130 to operate and measure the concentration and/or quality of the urea solution 120. For example, the processor may be configured to execute instructions to cause the light source 132 to emit a first quantity of light and to receive a signal (e.g., electric signal) from the light detector 134 indicative of a second quantity of light that corresponds to the amount of light received by the light detector 134.

The processor 142 may further be configured to determine a concentration and/or quality of the urea solution 120 based on the amount of light emitted by the light source 132 and the amount of light received by the light detector 134. Said differently, the controller 140 may be configured to determine a quantity and/or concentration of the urea solution 120 based on the first quantity of light (e.g., light emitted by the source) and the second quantity of light (e.g., light received by the detector). As used herein the term "concentration of urea" may refer to the concentration of urea within a liquid solution that includes another liquid such as water.

With some example, the processor 142 may be a general purpose processor, a microprocessor, an FPGA, an ASIC, or in general, any computing device configured to execute instructions. The memory 144 may be a computer readable medium, including non-volatile computer readable medium and/or non-transient computer readable medium configured to store computer executable instructions, that when executed by the processor 142, cause the processor to perform one or more operations.

**FIGS. 2-4** are block diagrams of examples urea quality and/or concentration sensors. In particular, these figures depict examples of the sensor 130 of **FIG. 1****.** Notably, the sensors described with respect to **FIGS.2-4** are described with reference to the system 100 of **FIG. 1****.** This is not intended to be limiting and, within the scope of the appended claims,
the sensors depicted and described herein can be implemented in systems with more, less, or different configurations that than shown in **FIG. 1****.**

Turning more specifically to **FIG. 2****,** a sensor 200 is shown, which does not fall within the scope of the claims. The sensor 200 includes the light source 232, the light detector 234 and the lumen 236. In particular, the light source 232 and the light detector 234 are operably coupled by the lumen 236. As depicted, the lumen 236 is straight. In some examples, the lumen 236 may be an uncoated fiber optic cable, or uncoated optical fiber. During operation, the controller 140 may cause the light source 232 to emit light, which travels down the lumen 236 and is received by the light detector 234. As with the embodiment of FIG. 1 and similarly in the examples and embodiments of FIG. 3 and FIG. 4, at least a portion of the lumen 236 may be directly immersed in the urea solution 120. The amplitude of the received light is measured and the quality and/or concentration of the urea solution 120 can be measured based on the received amplitude. More particularly, the light emits a quantity (e.g., amplitude, power, frequency, or the like) of light 235-a. As the light 235-a propagates through the lumen 236, a portion of the light escapes the lumen as light loss 235-c. Accordingly, just a portion of the light 235-a may be received by the light detector 234. This portion of light is represented as light 235-b. Accordingly, the amount of light 235-c that escaped the lumen 236 can be determined based on the amplitude of the received light 235-b. The received light 235-b and/or the escaped light 235-c can be used to determine the refractive index of the urea solution 120, which can in turn be used to determine the concentration and/or quality of the urea solution 120, as discussed above.

Turning more specifically to **FIG. 3****,** a sensor 300 is shown. The sensor 300 includes the light source 332, the light detector 334 and the lumen 336. In particular, the light source 332 and the light detector 334 are operably coupled to the lumen 336. As depicted, the lumen 336 is bent. According to the invention the lumen 336 is a bent optical fiber. It is to be appreciated, that the lumen 336 may include one bent section, more bends and/or bends of alternative configuration than that shown in **FIG. 3****.** For example, the lumen 336 may be "S" shaped, "Z" shaped, or the like. According to the present invention, however, the lumen 336 is "Z" shaped. The operation of the sensor 300 is similar to the operation of the sensor 200 in that the light source 332 emits light that travels through the lumen 336 and is received by the light detector 334. Notably, due to the overall shape of the lumen 336 and particularly the bent portion, an increased amount of light may escape from the lumen. For example, light 335-a emitted by the light source 232 and light 235-b received by the detector are depicted. Additionally, light loss 235-c is depicted. The bent portions of the lumen 336 may be configured to increase the sensitivity of the sensor. In particular, the level of concentration and/or quality of urea solution that may be determined may be increased.

Turning more specifically to **FIG. 4****,** a sensor 400 is shown, which does not fall within the scope of the claims. The sensor 400 includes the light source 432, the light detector 434 and the lumen 436. In particular, the light source 432 and the light detector 434 are operably connected to the lumen 436. Additionally, the lumen 436 includes a conical end 438. During operation, light (e.g., light 435-a) is emitted from the light source 432 and transmitted down the lumen 436 to the conical end 438. Due to the conical shape of the conical end 438, a portion (e.g., 435-b) of the light 435-a is reflected back up the lumen 436 to the light detector 434 while another portion (e.g., 435-c) of the light 435-a escapes from the lumen 436, and particularly from the conical end 438. In other words, the conical end 438 is configured to reflect at least a portion of the light received from the light source 432 located adjacent a first end opposite the conical end, where the reflected light is transmitted from the second end through the lumen 436 back to the first end.

In the example of FIG. 4 light emitted from the light source 432 may undergo multiple internal reflections within the conical end 428 of lumen 436 before a portion of the light incident on the conical end 428 is returned to the light detector 434.

As the concentration and/or quality of the urea solution 120 changes, the refractive index of the urea solution 120 also changes and the amount of light 435-b reflected back to the light detector 434 may change accordingly. As a result, the concentration and/or quality of the urea solution 120 can be determined. In other words, a relationship between concentration of urea solution 120 or other quality of urea solution 120 and the refractive index of the urea solution may be known. The amount of light 435-b, such as a percentage of the amount of light 435-a, may also be used to indicate the refractive index of the urea solution 120, since the amount of reflected light at the interface of the lumen 436 and urea solution 120 may vary with refractive index. Accordingly, the amount of percentage of light 435-b with respect to the amount of light 435-a may be a convenient measure of a quality of the urea solution 120 such as refractive index.

An advantage afforded by the arrangement of the sensor 4 of FIG. 4 is the ability to locate a light source and light detector adjacent one another.

With some examples, the lumen 136 of the sensor 130 (e.g., the lumen 236, 336, or 436) may be a porous optical fiber. In particular, the lumen 136 may have pores to increase the surface area between the lumen 136 and the urea solution 120 as compared to a non-porous optical fiber. The increased surface area may increase the sensitivity of the sensor 130 and may provide for finer grained detection between changes in the refractive index of the urea solution 120.

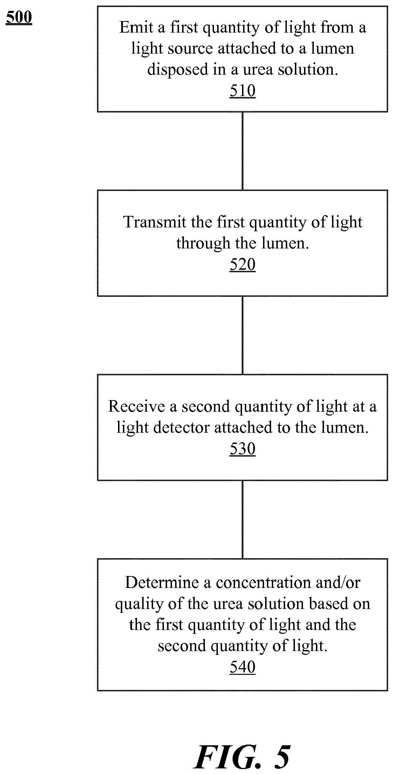

**FIG. 5** is a logic flow for a method 500 for determining a concentration and/or quality of urea solution. In some examples, the system 100 and or the sensors 200, 300, and/or 400 may implement the method 500.

The method 500 may begin at block 510. At block 510, emit a first quantity of light from a light source attached to a lumen disposed in a urea solution; the light source 132 may emit a first quantity of light and communicate the light to the lumen 136. At block 520, transmit the first quantity of light through the lumen; the first quantity of light may be transmitted through the lumen 136, which is disposed in the urea solution 120. At block 530, receive a second quantity of light at a light detector attached to the lumen; the light detector 134 may receive a second quantity of light. As detailed above, a portion of the light emitted by the light source and transmitted through the lumen will escape the lumen. Accordingly the detector receives the portion (e.g., the portion that does not escape from the lumen) of light emitted by the source.

Continuing to block 540, determine a concentration and/or quality of the urea solution based on the first quantity of light and the second quantity of light; the controller 140 may determine the quality and/or concentration of the urea solution 120 based on the first quantity of light and the second quantity of light. Said differently the controller 140 may determine the quality and/or concentration of the urea solution based on the amount (e.g., amplitude, or the like) of light emitted by the source and the amount (e.g., amplitude, or the like) of light received by the detector.

As noted above, the present embodiments may be usefully employed to monitor and control other systems of liquid solutions where a first substance is dissolved in a liquid solution, to the extent that changes in the concentration of the first substance, or presence of impurities, may change the refractive index of the solution. Examples include measuring the alcohol content in an automobile fuel, where the automobile fuel may include a liquid solution of alcohol and hydrocarbon liquids. In such systems, changes in alcohol concentration may engender changes in refractive index that are detectable as changes in the amount of light detected in a sensor of the aforementioned embodiments.

As used herein, references to "an embodiment," "an implementation," "an example," and/or equivalents is not intended to be interpreted as excluding the existence of additional embodiments that also incorporate the recited features.

While the present disclosure has been made with reference to certain embodiments, numerous modifications, alterations and changes to the described embodiments are possible without departing from the scope of the present invention defined in the appended claim(s). Accordingly, it is intended that the present disclosure not be limited to the described embodiments, but that it has the full scope defined by the language of the following claims.

## Claims

1. A sensor to measure a liquid, comprising:
a light source (132);
a lumen (136), wherein the light source (132) is operably coupled to the lumen (136),
wherein the lumen (136) is disposed in a liquid solution (120), wherein the light source (132) is configured to emit light and communicate the light to the lumen (136);
wherein the lumen (136) is provided as a bent optical fiber,
a light detector (134) operably coupled to the lumen (136), the light detector (134) configured to receive at least a portion of the light from the lumen (136); and
a controller (140) configured to determine a concentration or quality of the liquid solution (120) based on the light emitted by the light source and the portion of the light received by the light detector (134) **characterized in that** the lumen (136) is "Z" shaped to provide an increased amount of light escaping from the lumen (136) into the liquid solution (120).

2. The sensor of claim 1, wherein the liquid solution (120) is a urea solution.

3. The sensor of claim 1, wherein the lumen (136) is an uncoated fiber optic cable.

4. The sensor of claim 3, wherein the lumen (136) is a porous optical fiber.

5. The sensor of claim 4, wherein the porous optical fiber presents an increased surface area to the liquid solution (120) compared to a non-porous optical fiber.

6. A method of measuring a liquid, comprising:
emitting a first quantity of light from a light source (132) attached to a lumen (136) disposed in a liquid solution (120);
transmitting the first quantity of light through the lumen (136);
receiving a second quantity of light at a light detector (134) attached to the lumen (136); and
determining a concentration or quality of the liquid solution (120) based on the first quantity of light and the second quantity of light,
further comprising providing the lumen (136) as a bent optical fiber **characterized in that** the
lumen (136) is "Z" shaped to provide an increased amount of light escaping from the lumen (136) into the liquid solution (120).

7. The method of claim 6, wherein a refractive index of the liquid solution (120) is variable according to a concentration of a substance with the liquid solution (120).

8. The method of claim 7, wherein the liquid solution (120) is a urea solution.

## Patentansprüche

1. Ein Sensor zur Messung einer Flüssigkeit, beinhaltend:
eine Lichtquelle (132);
ein Lumen (136), wobei die Lichtquelle (132) wirksam an das Lumen (136) gekoppelt ist,
wobei das Lumen (136) in einer flüssigen Lösung (120) angeordnet ist,
wobei die Lichtquelle (132) dazu konfiguriert ist, Licht zu emittieren und das Licht an das Lumen (136) zu kommunizieren;
wobei das Lumen (136) als eine gebogene optische Faser bereitgestellt ist,
einen Lichtdetektor (134), der wirksam an das Lumen (136) gekoppelt ist, wobei der Lichtdetektor (134) dazu konfiguriert ist, mindestens einen Anteil des Lichts vom Lumen (136) zu empfangen; und
eine Steuerung (140), die dazu konfiguriert ist, eine Konzentration oder Qualität der flüssigen Lösung (120) auf der Grundlage des von der Lichtquelle emittierten Lichts und
des vom Lichtdetektor (134) empfangenen Anteils des Lichts zu bestimmen, **dadurch gekennzeichnet, dass** das Lumen (136) "Z"-förmig ist, um eine erhöhte Menge von Licht bereitzustellen, das vom Lumen (136) in die flüssige Lösung (120) austritt.

2. Sensor gemäß Anspruch 1, wobei die flüssige Lösung (120) eine Harnstoff-Lösung ist.

3. Sensor gemäß Anspruch 1, wobei das Lumen (136) ein unbeschichtetes Faseroptikkabel ist.

4. Sensor gemäß Anspruch 3, wobei das Lumen (136) eine poröse Optikfaser ist.

5. Sensor gemäß Anspruch 4, wobei die poröse Optikfaser der flüssigen Lösung (120) im Vergleich zu einer nicht porösen optischen Faser einen vergrößerten Oberflächenbereich darbietet.

6. Ein Verfahren zur Messung einer Flüssigkeit, beinhaltend:
Emittieren einer ersten Menge Licht von einer Lichtquelle (132), die an einem Lumen (136) angebracht ist, das in einer flüssigen Lösung (120) angeordnet ist;
Übertragen der ersten Lichtmenge durch das Lumen (136) hindurch;
Empfangen einer zweiten Lichtmenge an einem Lichtdetektor (134), der am Lumen (136) angebracht ist; und
Bestimmen einer Konzentration oder Qualität der flüssigen Lösung (120) auf der Grundlage der ersten Lichtmenge und der zweiten Lichtmenge,
ferner beinhaltend das Bereitstellen des Lumens (136) als eine gebogene optische Faser, **dadurch gekennzeichnet, dass** das Lumen (136) "Z"-förmig ist, um eine erhöhte Menge von Licht bereitzustellen, das vom Lumen (136) in die flüssige Lösung (120) austritt.

7. Verfahren gemäß Anspruch 6, wobei ein Brechungsindex der flüssigen Lösung (120) gemäß einer Konzentration einer Substanz mit der flüssigen Lösung (120) variabel ist.

8. Verfahren gemäß Anspruch 7, wobei die flüssige Lösung (120) eine Harnstoff-Lösung ist.

## Revendications

1. Un capteur pour mesurer un liquide, comprenant :
une source lumineuse (132) ;
un lumen (136), la source lumineuse (132) étant couplée fonctionnellement au lumen (136),
le lumen (136) étant disposé dans une solution liquide (120),
la source lumineuse (132) étant configurée pour émettre de la lumière et pour communiquer la lumière au lumen (136) ;
le lumen (136) étant fourni sous forme de fibre optique courbe,
un détecteur de lumière (134) couplé fonctionnellement au lumen (136), le détecteur de lumière (134) étant configuré pour recevoir au moins une partie de la lumière provenant du lumen (136); et
un contrôleur (140) configuré pour déterminer une concentration ou une qualité de la solution liquide (120) sur la base de la lumière émise par la source lumineuse et la partie de la lumière reçue par le détecteur de lumière (134) **caractérisé en ce que** le lumen (136) est en forme de « Z » pour fournir une quantité accrue de lumière qui s'échappe du lumen (136) pour se répandre dans la solution liquide (120).

2. Le capteur de la revendication 1, dans lequel la solution liquide (120) est une solution d'urée.

3. Le capteur de la revendication 1, dans lequel le lumen (136) est un câble à fibre optique non gainée.

4. Le capteur de la revendication 3, dans lequel le lumen (136) est une fibre optique poreuse.

5. Le capteur de la revendication 4, dans lequel la fibre optique poreuse présente une surface de contact accrue avec la solution liquide (120) comparée à une fibre optique non poreuse.

6. Une méthode pour mesurer un liquide, comprenant le fait :
d'émettre une première quantité de lumière à partir d'une source lumineuse (132) attachée à un lumen (136) disposé dans une solution liquide (120) ;
de transmettre la première quantité de lumière à travers le lumen (136) ;
de recevoir une seconde quantité de lumière au niveau d'un détecteur de lumière (134) attaché au lumen (136) ; et
de déterminer une concentration ou une qualité de la solution liquide (120) sur la base de la première quantité de lumière et de la seconde quantité de lumière,
comprenant en outre le fait de fournir le lumen (136) sous forme de fibre optique courbe **caractérisée en ce que** le lumen (136) est en forme de « Z » pour fournir une quantité accrue de lumière qui s'échappe du lumen (136) pour se répandre dans la solution liquide (120).

7. La méthode de la revendication 6, dans laquelle un indice de réfraction de la solution liquide (120) est variable en fonction d'une concentration d'une substance avec la solution liquide (120).

8. La méthode de la revendication 7, dans laquelle la solution liquide (120) est une solution d'urée.
